# EUROPEAN PATENT APPLICATION

(11) **EP 4 804 266 A2**
(43) Date of publication of application: **09.09.2026**
(21) Application number: 26193950.8
(22) Date of filing: 27.01.2023
(51) Int. Cl.: H01M 10/04

(54) **BATTERY MODULE, BATTERY PACK, AND VEHICLE INCLUDING THE BATTERY PACK**

(30) Priority: 25.04.2022 KR 20220050987; 25.01.2023 KR 20230009762
(62) Document number(s) of the earlier application(s) in accordance with Art. 76 EPC: 26171270.7 / 4 757 034; 23764549.4 / 4 293 800
(71) Applicant: LG Energy Solution, Ltd., Seoul 07335 (KR)
(72) Inventor: YUN, Hyun-Seop, 34122 DAEJEON (KR); YANG, Jae-Hun, 34122 DAEJEON (KR)
(74) Representative: Hoffmann Eitle

(57) **Abstract**

Provided are a battery module configured to ensure structural stability even when a thermal event occurs, a battery pack, and a vehicle including the battery pack.

A battery module includes a cell assembly including a plurality of battery cells, and a compression pad assembly located between the plurality of battery cells, the compression pad assembly including a heat blocking unit in which at least one hollow portion is formed.

## Description

### TECHNICAL FIELD

The present disclosure relates to a battery module, a battery pack, and a vehicle including the battery pack, and more particularly, to a battery module configured to ensure structural stability even when a thermal event occurs, a battery pack, and a vehicle including the battery pack. The present application claims priority to Korean Patent Application Nos. 10-2022-0050987 and 10-2023-0009762, respectively filed on April 25, 2022 and January 25, 2023 in the Republic of Korea, the disclosures of which are incorporated herein by reference.

### BACKGROUND ART

As the demand for portable electronic products such as laptops, video cameras, and mobile phones has recently rapidly increased and the development of electric vehicles, energy storage batteries, robots, satellites, etc. has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. Also, a lithium secondary battery includes an electrode assembly in which a positive electrode plate and a negative electrode plate to which a positive electrode active material and a negative electrode active material are respectively applied are located with a separator therebetween, and a casing in which the electrode assembly is sealed and accommodated along with an electrolyte.

According to a shape of a battery case, lithium secondary batteries may be classified into can-type secondary batteries in which an electrode assembly is received in a metal can, and pouch-type secondary batteries in which an electrode assembly is received in a pouch of an aluminum laminate sheet. Can-type secondary batteries may be classified into cylindrical batteries and prismatic batteries according to a shape of a metal can.

A pouch of a pouch-type secondary battery may be largely divided into a lower sheet and an upper sheet covering the lower sheet. In this case, an electrode assembly formed by stacking and/or winding a positive electrode, a negative electrode, and a separator is accommodated in the pouch. After the electrode assembly is accommodated, edges of the upper sheet and the lower sheet are sealed to each other through thermal fusion or the like. Also, an electrode tab drawn out from each electrode may be coupled to an electrode lead, and an insulating film may be added to a portion of the electrode lead contacting a sealing portion.

As such, a pouch-type secondary battery may be flexibly formed in various shapes. Also, a pouch-type secondary battery has the advantage of implementing a secondary battery of the same capacity with a smaller volume and mass.

In order for a lithium secondary battery to provide high voltage and high current, a plurality of battery cells are overlapped or stacked by themselves or overlapped or stacked while mounted on a cartridge to form a dense structure, and then, are used as a battery module or a battery pack in which the battery cells are electrically connected.

Safety is one of the most important issues in such a battery pack configuration. In particular, when a thermal event occurs in any one of a plurality of battery cells included in a battery pack, it is necessary to suppress propagation of the thermal event to other battery cells. When the propagation of the thermal event between battery cells is not appropriately suppressed, this may cause a thermal event of other battery cells included in the battery pack, thereby causing a bigger problem such as ignition or explosion of the battery pack. Furthermore, the ignition or explosion of the battery pack may cause great damage to surrounding people or property. Accordingly, in such a battery pack, a configuration capable of appropriately controlling a thermal event is required.

### DISCLOSURE

### Technical Problem

The present disclosure is designed to solve the problems of the related art, and therefore the present disclosure is directed to providing a battery module configured to ensure structural stability even when a thermal event occurs, a battery pack, and a vehicle including the battery pack.

However, technical objectives to be achieved by the present disclosure are not limited thereto, and other unmentioned technical objectives will be apparent to one of ordinary skill in the art to which the present disclosure pertains from the description of the present disclosure.

### Technical Solution

In one aspect of the present disclosure, there is provided a battery module including a cell assembly including a plurality of battery cells, and a compression pad assembly located between the plurality of battery cells, the compression pad assembly including a heat blocking unit in which at least one hollow portion is formed.

Preferably, the compression pad assembly may be configured to closely contact facing battery cells in a stacking direction of the plurality of battery cells.

Preferably, an air layer may be formed in the at least one hollow portion.

Preferably, the heat blocking unit may further include a body portion in which the at least one hollow portion is formed, the body portion being located between the plurality of battery cells, wherein the body portion is formed of a metal material.

Preferably, the heat blocking unit may further include a coating portion provided on both side surfaces of the body portion in a stacking direction of the plurality of battery cells and configured to block a flame due to thermal runaway of the cell assembly.

Preferably, the compression pad assembly may further include a compression pad provided on the coating portion in the stacking direction of the plurality of battery cells and configured to closely contact facing battery cells in the stacking direction of the plurality of battery cells.

Preferably, the hollow portion may extend in at least one of an up-down direction and a stacking direction of the plurality of battery cells, in the body portion.

Preferably, the hollow portion may extend in the stacking direction of the plurality of battery cells in the body portion to contact the coating portion.

Preferably, the battery module may further include a heat blocking member located between the compression pad and a battery cell facing the compression pad, in the stacking direction of the plurality of battery cells.

In a preferable example, the hollow portion may be included as a single layer in the compression pad assembly.

In another preferable example, the hollow portion may extend in a longitudinal direction of the battery cell, and a plurality of hollow portions may be included in the compression pad assembly while being spaced apart from each other.

In another preferable example, the plurality of hollow portions are regularly arranged by controlling a size of each hollow portion and an interval between the hollow portions.

In another preferable example, the coating portion may include a ceramic coating layer formed of only an inorganic material, without an organic material.

According to another aspect of the present disclosure, there is provided a battery pack including at least one battery module as described above.

According to still another aspect of the present disclosure, there is provided a vehicle including at least one battery pack as described above.

### Advantageous Effects

According to this embodiment of the present disclosure, because a compression pad assembly in which an insulating material is provided is located between battery cells, the spread of a flame to other battery cells adjacent to a battery cell in which thermal runaway occurs may be delayed. Accordingly, structural stability of a battery module may be improved.

Also, because a hollow portion for preventing heat transfer is provided in the compression pad assembly, the compression pad assembly capable of delaying the spread of a flame may be configured in a compact structure without increasing a size compared to the related art.

According to the present disclosure, through the compression pad assembly, propagation of thermal runaway in a unit module or between modules may be suppressed and delayed.

According to the present disclosure, even when thermal runaway, ignition, or explosion occurs in some battery cells in any one battery module, the thermal runaway, ignition, or explosion does not propagate to other battery modules. Accordingly, because there is no thermal runaway, ignition, or explosion of a plurality of battery cells in series, secondary thermal runaway or secondary fire or explosion does not occur.

Accordingly, according to the present disclosure, even when thermal runaway, fire, or explosion occurs in some of a plurality of battery cells, propagation of the thermal runaway, fire, or explosion to other adjacent battery cells may not occur. Accordingly, a battery module having improved safety against thermal runaway, fire explosion, that is, thermal safety, and a battery pack and a vehicle including the battery pack may be provided.

In addition, various other additional effects may be achieved by various embodiments of the present disclosure. The present disclosure may have various other effects, which will be described in detail in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a battery module, according to an embodiment of the present disclosure.
FIG. 2 is a detailed side view illustrating a part of the battery module of FIG. 1.
FIG. 3 is a view illustrating an overall shape of a compression pad assembly provided in the battery module of FIG. 2.
FIG. 4 is a side view illustrating the compression pad assembly of FIG. 3.
FIG. 5 is a partial exploded perspective view illustrating the compression pad assembly of FIG. 4.
FIG. 6 is a view illustrating a state where the compression pad assembly of FIG. 4 blocks a flame due to thermal runaway of a cell assembly.
FIG. 7 is a view illustrating a battery module, according to a second embodiment of the present disclosure.
FIG. 8 is a view illustrating a battery module, according to a third embodiment of the present disclosure.
FIG. 9 is a view illustrating a battery module, according to a fourth embodiment of the present disclosure.
FIG. 10 is a view illustrating a battery module, according to a fifth embodiment of the present disclosure.
FIG. 11 is a view illustrating a battery module, according to a sixth embodiment of the present disclosure.
FIG. 12 is a schematic view illustrating a battery pack, according to an embodiment of the present disclosure.
FIG. 13 is a schematic view illustrating a vehicle, according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

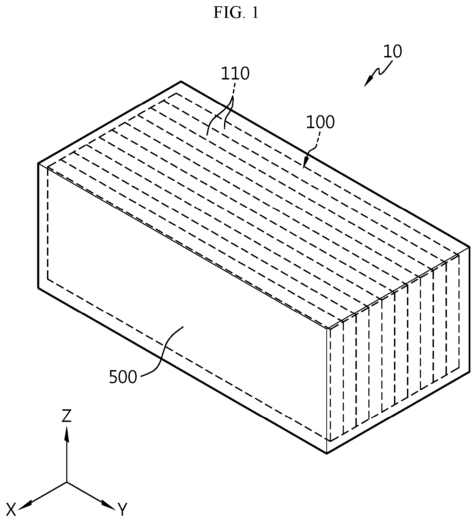

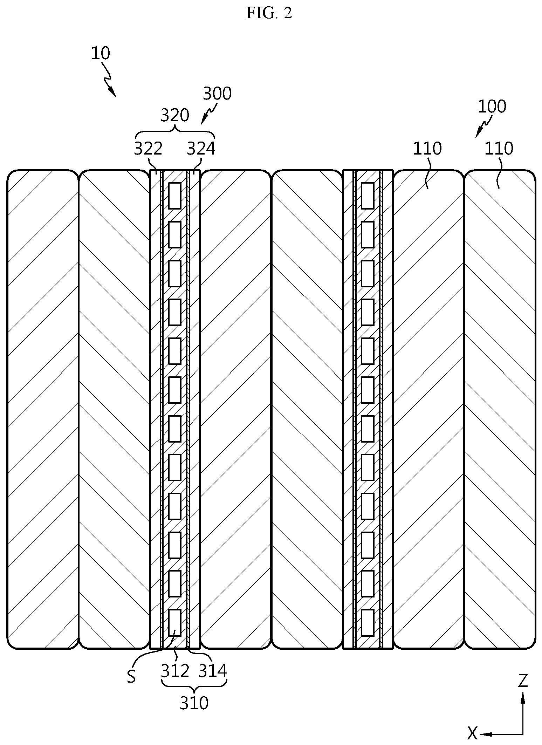

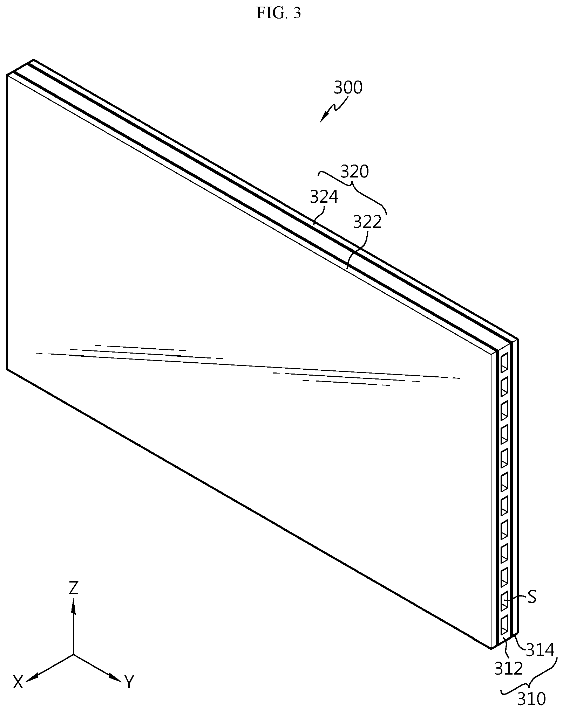

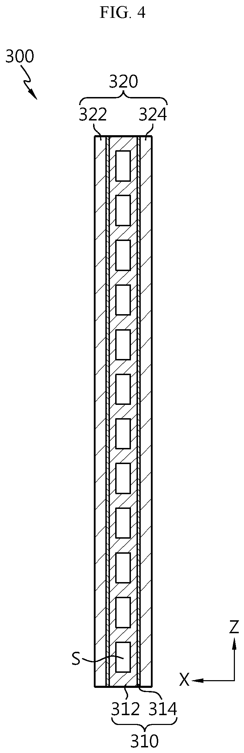

FIG. 1 is a view illustrating a battery module 10, according to an embodiment of the present disclosure. FIG. 2 is a detailed side view illustrating a part of the battery module 10 of FIG. 1. FIG. 3 is a view illustrating an overall shape of a compression pad assembly 300 provided in the battery module 10 of FIG. 2. FIG. 4 is a side view illustrating the compression pad assembly 300 of FIG. 3.

In an embodiment of the present disclosure, an X-axis direction in the drawings may refer to a stacking direction of battery cells 110 described below, a Y-axis direction may refer to a longitudinal direction of the battery cell 110 perpendicular to the X-axis direction in a horizontal plane (XY plane), and a Z-axis direction may refer to an up-down direction of the battery cell 110 perpendicular to both the X-axis direction and the Y-axis direction.

Referring to FIGS. 1 to 4, the battery module 10 according to an embedment of the present disclosure may include a cell assembly 100 and the compression pad assembly 300.

The cell assembly 100 may include a plurality of battery cells 110. Each of the battery cells 110 may refer to a secondary battery. Each battery cell 110 may be provided as a pouch-type battery cell, a cylindrical battery cell, or a prismatic battery cell. For example, each battery cell 110 may be a pouch-type battery cell. The battery cells 110 may be arranged to be stacked in one direction (X-axis direction).

The battery cell 110 may be a plate-shaped battery cell having a large area in a YZ plane. In this case, the cell assembly 100 may be an assembly of battery cells 110 that are pouch-type battery cells stacked with wide surfaces facing each other. The cell assembly 100 may be an assembly in which the battery cells 110 are vertically erected (in the Z-axis direction) and are horizontally stacked (in the X-axis direction). Pouch-type battery cells have advantages of high energy density and easy stacking compared to their size and mass. However, the battery cell 110 included in the battery module 10 according to the present disclosure is not limited to a pouch-type battery cell, but may be any of various types of secondary batteries known at the time of filing the present application.

When the battery cell 110 is a pouch-type battery cell, the battery cell 110 may include an electrode assembly, a pouch, an electrode lead, and an insulating film (sealing tape).

Although not shown, it is preferable that the electrode assembly includes a separator located between a positive electrode plate and a negative electrode plate that are alternately and repeatedly stacked, and separators are located at both outermost sides for insulation.

The positive electrode plate includes a positive electrode current collector and a positive electrode active material layer coated on one surface of the positive electrode current collector, and a positive electrode uncoated area not coated with a positive electrode active material is formed at an end and functions as a positive electrode tab.

The negative electrode plate includes a negative electrode current collector and a negative electrode active material layer coated on one surface or both surfaces of the negative electrode current collector, and a negative electrode uncoated area not coated with a negative electrode active material is formed at an end and functions as a negative electrode tab.

Also, the separator is located between the positive electrode plate and the negative electrode plate to prevent direct contact between the electrode plates having different polarities. The separator may be formed of a porous material to allow ions to move between the positive electrode plate and the negative electrode plate through an electrolyte.

The pouch may include a receiving portion in which the electrode assembly is accommodated, and a sealing portion extending along a circumference of the receiving portion and sealing the pouch through thermal fusion in a state where the electrode lead is drawn out to the outside.

A pair of electrode leads are respectively connected to the positive electrode tab and the negative electrode tab of the electrode assembly and are drawn out of the pouch. The pair of electrode leads facing each other may respectively protrude from one end and the other end of the battery cell 110. For example, the electrode leads may protrude from both ends of the battery cell 110 in the longitudinal direction.

The compression pad assembly 300 may be located between a plurality of battery cells 110. The compression pad assembly 300 may be located between all battery cells 110, or may be located only between some battery cells 110. For example, the compression pad assembly 300 is a plate-shaped member that is vertically erected (in the Z-axis direction) and has a wide surface in the YZ plane, and may be located between the battery cells 110 to face wide surfaces of the battery cells 110.

In an embodiment, the compression pad assembly 300 may be located between the plurality of battery cells 110 to suppress swelling that may occur in the cell assembly 100. To this end, the compression pad assembly 300 may partially include an elastic material such as a contractible sponge.

In the battery module 10 according to the present disclosure, an event such as thermal runaway may occur in a specific battery cell 110 in the cell assembly 100. In this case, when a flame or spark is generated due to the thermal runaway occurring in the specific battery cell 110, there is a risk that the flame or spark may propagate to other battery cells 110 adjacent to the specific battery cell 110.

To solve this problem, the compression pad assembly 300 of the present disclosure may include a heat blocking unit 310 in which at least one hollow portion S is formed. In this case, a heat insulating material for preventing heat transfer to the battery cells 110 located on both sides of the compression pad assembly 300 may be provided in the hollow portion S. Due to this configuration, the spread of a flame generated in a specific battery cell 110 may be delayed by the compression pad assembly 300. The heat insulating material will be described below in more detail.

According to this embodiment of the present disclosure, because the compression pad assembly 300 in which a heat insulating material is provided is located between the battery cells 110, the spread of a flame to the battery cells 110 adjacent to the battery cell 110 in which thermal runaway occurs may be delayed. Accordingly, structural stability of the battery module 10 may be improved.

Also, because the hollow portion S for preventing heat transfer is provided in the compression pad assembly 300, the compression pad assembly 300 capable of delaying the spread of a flame may be configured in a compact structure without increasing a size compared to the related art.

The battery module 10 may further include a module case 500. The cell assembly 100 and the compression pad assembly 300 may be accommodated in the module case 500. To this end, the module case 500 may have an inner receiving space in which the cell assembly 100 and the compression pad assembly 300 are accommodated. The module case 500 may include a mono frame, which is a quadrangular tubular body having openings that are open on both sides of the battery cell 110 in the longitudinal direction, and an end frame coupled to each of the openings of the mono frame. The mono frame has a very simple structure and has a space and shape suitable to accommodate the cell assembly 100 therein, is easy to handle by simply pushing the cell assembly 100 through the opening, and is easy to assemble the battery module 10 by blocking only the opening with the end frame. Accordingly, because a structure of a battery pack including the battery module 10 is simple, compact, and easy to assemble the battery module 10 without being complicated and occupying a lot of space, processability may be excellent. In another example, the module case 500 may include a U-shaped frame including a bottom surface and two side walls to surround a bottom surface and both side surfaces of the cell assembly 100, an end plate coupled to each of front and rear sides of the U-shaped frame, and an upper plate coupled to a top surface of the U-shaped frame. In the module case 500, the battery cell 110 may be reliably fixed even without using a component such as a cell cartridge. Because an edge of a battery cell does not need to be inserted and fixed to a cell cartridge as in the related art, a design margin of a battery module may be increased, and a problem that impact or vibration that may occur when the edge of the battery cell is inserted and mounted into the cell cartridge is transmitted to the edge of the battery cell may be solved. Because the battery module 10 including the module case 500 and a battery pack including the battery module 10 have an excellent effect of protecting the battery cell 110 against external vibration, the battery module 10 and the battery pack are suitable for application to a vehicle that is frequently exposed to external vibration. In a structure in which battery cells are stacked in a component such as a cell cartridge, due to the presence of the component such as the cell cartridge, there is little or no cooling effect, or cooling may proceed only to a surface of the battery cell, and cooling is not well performed in a height direction of a battery module. In the battery module 10 according to an embedment of the present disclosure, however, cooling is well performed even in a height direction (Z-axis direction) of the battery module 10.

The compression pad assembly 300 will now be described in more detail.

Referring back to FIGS. 1 to 4, the compression pad assembly 300 may be configured to closely contact facing battery cells 110 in the stacking direction of the plurality of battery cells 110. Accordingly, because the compression pad assembly 300 is compressed when the facing battery cells 110 expand, swelling that may occur in the cell assembly 100 may be effectively suppressed.

Also, because the compression pad assembly 300 closely contacts the facing battery cells 110, a flame generated in a specific battery cell 110 may not spread to other portions (e.g., an inner space of the module case 500) of the battery module 10, and may be reliably blocked by the hollow portion S of the heat blocking unit 310 in the compression pad assembly 300. In an embodiment, a size of a surface of the compression pad assembly 300 facing the battery cell 110 may correspond to a size of a side surface in the stacking direction of the battery cell 110.

According to this embodiment of the present disclosure, swelling that may occur in the cell assembly 100 and the spread of a flame in the battery module 10 due to thermal runaway may be more effectively suppressed.

Also, an air layer may be formed in the at least one hollow portion S. The air layer may function as a heat insulating material capable of preventing heat transfer to the battery cells 110 located on both sides of the compression pad assembly 300. That is, the hollow portion S is not filled with a separate coolant or additional member. High heat insulation of the air layer is used without the need for a separate coolant circulation means or additional member. Cooling is not attempted by the hollow portion S, but thermal propagation is blocked by the hollow portion S. Accordingly, even when there is a temperature change in some battery cells 110 in the battery module 10, heat transfer to the outside may be blocked, and as a result, thermal propagation to adjacent battery cells 110 may be blocked to prevent a chain thermal event, thereby improving the safety of the battery module 10.

According to this embodiment of the present disclosure, because the hollow portion S is formed in the compression pad assembly 300 and an air layer for preventing heat transfer is provided in the hollow portion S, a liquid or solid heat insulating material is not required, thereby reducing manufacturing costs and an overall weight of the compression pad assembly 300.

Referring back to FIGS. 1 to 4, the heat blocking unit 310 may further include a body portion 312.

The body portion 312 in which at least one hollow portion S is formed may be located between the plurality of battery cells 110.

Also, the body portion 312 may be formed of a metal material. In this case, the body portion 312 may function as a main frame to maintain an overall structure of the compression pad assembly 300. For example, the body portion 312 may include, but is not limited to, aluminum (Al) or an Al alloy. Also, the body portion 312 may be formed of a metal material that does not easily burn in a flame. When the body portion 312 is formed of Al or an Al alloy, the body portion 312 that has excellent strength, lightness, heat resistance, and reliable blocking of flame propagation may be obtained.

According to this embodiment of the present disclosure, because a main frame of the compression pad assembly 300 is formed by using the body portion 312 formed of a metal material that does not easily burn in a flame, structural stability of the compression pad assembly 300 may be relatively stably maintained even when a flame due to thermal runaway of the battery cell 110 is generated, compared to a conventional configuration formed of only a material such as PET or sponge. In other words, an existing known battery module or battery pack has a problem in that thermal runaway spreads between adjacent battery cells or between adjacent battery modules due to internal or external heat conduction. In other words, because the existing battery module or battery pack does not include a structure that blocks heat conduction or radiation during an event such as propagation of thermal runaway, a flame may propagate to adjacent battery cells or battery modules. However, because the battery module 10 of the present disclosure includes the compression pad assembly 300 including the heat blocking unit 310 between adjacent battery cells 110, propagation of a flame during an event such as propagation of thermal runaway may be reliably prevented.

Also, because the body portion 312 includes therein the hollow portion S for preventing heat transfer to the battery cells 110 located on both sides of the body portion 312 and is formed of a metal material that does not easily burn in a flame, the spread of a flame generated in a specific battery cell 110 to other adjacent battery cells 110 may be more reliably delayed. That is, the body portion 312 of the present disclosure may minimize the risk of chain ignition of the battery cells 110.

When a compression pad is formed of only a material such as PET or sponge without including the body portion 312, the compression pad may be burned during heat transfer and a flame may spread in a battery module. According to the present disclosure, because the body portion 312 that does not easily burn in a flame is included, the spread of a flame in the battery module 10 may be prevented.

Also, because the hollow portion S including an air layer is formed in the body portion 312 formed of a metal material, manufacturing costs and an overall weight of the compression pad assembly 300 may be reduced.

The hollow portion S may extend in a longitudinal direction of the battery cell 110. Accordingly, the hollow portion S extends in a direction parallel to a pair of electrode leads. In the present embodiment, because the hollow portion S extends in a protruding direction of the electrode lead that generates relatively high heat in each battery cell 110, the effect of blocking thermal propagation between the battery cells 110 is excellent.

When a plurality of hollow portions S are provided, the hollow portions S may be included in the compression pad assembly 300 while being spaced apart from each other. In particular, as shown in FIGS. 2 to 4, the hollow portion S may be included as a single layer in the compression pad assembly 300. To further increase energy density of the battery module 10, it is necessary to reduce a thickness of the compression pad assembly 300. In order for the hollow portion S to be included as multi-layers while maintaining a required strength of the compression pad assembly 300, a thickness of the body portion 312 should be increased, and thus, it is preferable that the hollow portion S is included as a single layer.

In the illustrated example, in a cross-sectional structure of the compression pad assembly 300, because the hollow portion S is included as a single layer in the middle of the body portion 312, a shape and a size of the hollow portion S and an interval between the hollow portions S are constant. A shape and a size of the hollow portion S and an interval between the hollow portions S may be adjusted, so as to prevent thermal propagation by increasing a volume occupied by the hollowing portion S as much as possible while maintaining a rigidity of the body portion 312.

In order to include the hollow portion S in the body portion 312 formed of a metal material, the body portion 312 may be manufactured through extrusion. Because a protrusion for extruding a plate while forming a hollow portion is added to a mold through which a plate formed of a metal material is extruded, the hollow portion S may be formed in the body portion 312 while the body portion 312 is extruded in a plate shape. The hollow portion S may extend long in an extrusion direction, and adjacent hollow portions S are formed in parallel in the extrusion direction. Compared to a case where hollow structures irregularly exist such as a metal foam, because the body portion 312 to be used in the present disclosure has a regular arrangement of hollow structures, and the hollow portion S may be provided by controlling a size of the hollow portion S and an interval between the hollow portions S, a heat insulation effect may be precisely controlled and managed.

When the body portion 312 is extruded, because the hollow portion S extends in one direction in the extrusion direction and both ends are open, the body portion 312 may be referred to as a metal hollow material.

Because a size of the hollow portion S and an interval between the hollow portions S may be several mm, fine hollow portions S may be densely formed. For example, when a thickness D of the body portion 312 in the stacking direction of the battery cell 110 is 1.5 mm to 4 mm and a size of the hollow portion S and an interval between the hollow portions S is 0.3 mm to 2 mm, the body portion 312 may be thin and light and may ensure rigidity, and as many hollow portions S as possible may be included in a given space, thereby maximizing a heat insulation effect.

To further increase energy density of the battery module 10, it is necessary to reduce a thickness of the body portion 312. However, when a thin metal hollow material is extruded, the amount drawn out and molded is too small compared to the input amount of a molding material, and pressure applied for extrusion increases as a thickness of the metal hollow material decreases, thereby increasing the risk of damage to an extrusion mold. Accordingly, when a thickness of the metal hollow material decreases, a shape of a molded product may be distorted or a thickness may not be uniform. Accordingly, considering all of these problems, a size of the hollow portion S and an interval between the hollow portions S may be determined. The hollow portion S may be very densely formed, by adjusting variables during extrusion. Accordingly, a heat insulation effect is excellent.

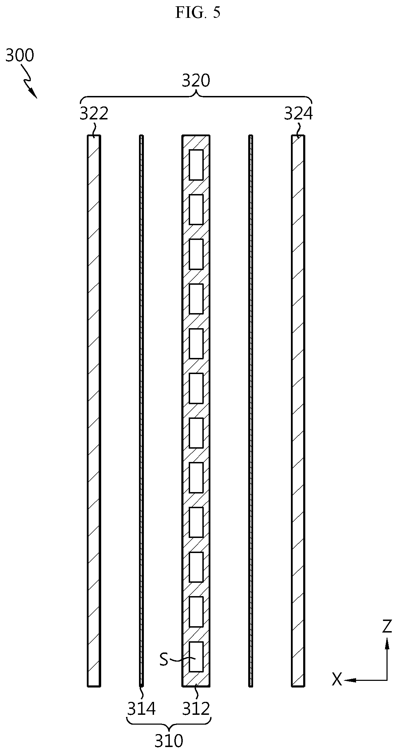

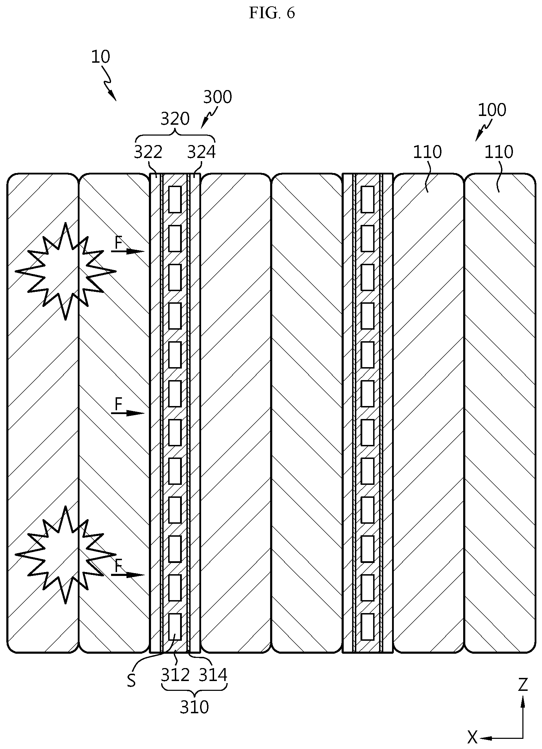

FIG. 5 is a partial exploded perspective view illustrating the compression pad assembly 300 of FIG. 4. FIG. 6 is a view illustrating a state where the compression pad assembly 300 of FIG. 4 blocks a flame due to thermal runaway of the cell assembly 100. In this case, a flame generated due to thermal runaway of the cell assembly 100 in FIG. 6 may be exemplarily denoted by 'F'.

Referring to FIGS. 5 and 6, the heat blocking unit 310 may further include a coating portion 314.

The coating portions 314 may be provided on both side surfaces of the body portion 312 in the stacking direction of the plurality of battery cells 110, and may be configured to block a flame due to thermal runaway of the cell assembly 100. For example, the heat blocking unit 310 may be provided as a thermal barrier coating. To this end, a thermal blocking coating material (e.g., an ecofriendly coating material) may be applied or attached to the heat blocking unit 310.

In a preferable example, the coating portion 314 may be a ceramic coating layer formed of only an inorganic material, without an organic material. The ceramic coating layer is a fire resistant coating layer. An existing known ceramic coating is to coat an organic material (e.g., fluororesin) with ceramic as an additive. In an embodiment of the present disclosure, because there is no organic material and ceramic is a main raw material, an ecofriendly and high-performance ceramic coating layer is used. The ceramic coating layer may be formed by applying a coating material including ceramic powder and curing it naturally or at a low temperature of about 200°C. In other words, a fire resistant coating layer is included in the heat blocking unit 310 of the compression pad assembly 300 of the present disclosure, and the fire resistant coating layer is an ecofriendly ceramic coating layer that is applied and cured.

The coating material may be a slurry obtained by mixing fine ceramic powder such as alumina or silica, water, and an inorganic dispersant. An inorganic oxide (e.g., K₂O or BaO) for forming glass may be further included. However, the slurry does not contain an organic solvent and an organic binder. When the slurry contains an organic solvent and an organic binder, heat resistance is low, and the coating is deteriorated over time after formation. In the present disclosure, the ceramic coating layer is formed by applying the slurry-type coating material to a surface of the body portion 312 and curing the coating material. The application may be performed by using any method such as of dip coating, spin coating, spray coating, or brushing. The slurry-type coating material is directly coated on a metal to enable low-temperature fusion, is ecofriendly and harmless to the human body, and has excellent corrosion resistance, wear resistance, and adhesion.

The ceramic coating layer may block a flame of 1000°C or higher. Accordingly, propagation of the flame to adjacent battery modules may be blocked. Also, the ceramic coating layer may further improve the durability of the compression pad assembly 300 and thus the battery module 10.

According to this embodiment of the present disclosure, because the spread of a flame is primarily delayed through the coating portion 314 for blocking a flame due to thermal runaway of the cell assembly 100 and is secondarily delayed through the body portion 312 and the hollow portion S provided in the body portion 312, the spread of a flame may be more effectively delayed. Also, according to this embodiment, structural stability of the battery module 10 may be further ensured.

Also, the compression pad assembly 300 may further include a compression pad 320.

The compression pad 320 may be provided on the coating portion 314 in the stacking direction of the plurality of battery cells 110. For example, the compression pad 320 may be coupled to a surface of the coating portion 314 through adhesion. For example, the compression pad 320 may be formed of an elastic material such as a sponge.

Also, the compression pad 320 may be configured to closely contact facing battery cells 110 in the stacking direction of the plurality of battery cells 110. Accordingly, the compression pad 320 may be configured to suppress swelling that may occur in the cell assembly 100.

In detail, the compression pad 320 may include a first pad 322 and a second pad 324.

The first pad 322 may be provided on a surface of the coating portion 314 provided on a side surface of the body portion 312 in the stacking direction of the plurality of battery cells 110. The first pad 322 may be configured to closely contact a facing battery cell 110 in the stacking direction of the plurality of battery cells 110. In this case, a size of a surface of the first pad 322 facing the battery cell 110 may correspond to a size of a side surface of the battery cell 110 in the stacking direction. Also, the first pad 322 may be compressed when the facing battery cell 110 expands.

The second pad 324 may be provided on a surface of the coating portion 314 provided on the other side surface of the body portion 312 in the stacking direction of the plurality of battery cells 110. The second pad 324 may be configured to closely contact a facing battery cell 110 in the stacking direction of the plurality of battery cells 110. In this case, a size of a surface of the second pad 324 facing the battery cell 110 may correspond to a size of a side surface of the battery cell 110 in the stacking direction. Also, the second pad 324 may be compressed when the facing battery cell 110 expands.

According to this embodiment of the present disclosure, because the spread of a flame due to thermal runaway of the cell assembly 100 may be delayed and swelling that may occur in the cell assembly 100 may be suppressed, structural stability of the battery module 10 may be further ensured.

When an existing compression pad formed of only a material such as PET or sponge is used and a thickness of the existing compression pad is about 3 mm to about 4 mm, the compression pad assembly 300 of the present disclosure may maintain an overall thickness at about 3 mm to about 4 mm and may have an excellent effect of preventing chain thermal propagation compared to the related art. For example, a thickness of each of the first pad 322 and the second pad 324 may be about 0.5 mm, a thickness of the heat blocking unit 310 including the coating portion 314 and the body portion 312 may be about 2 mm to about 3 mm, and an overall thickness of the compression pad assembly 300 may be about 3 mm to about 4 mm. In this case, a size of the hollow portion S in the stacking direction of the battery cells 110 may be about 1 mm. Here, a thickness and a size are variable. However, a size of the hollow portion S is very small compared to an outer appearance size of the battery module 10 reaching hundreds of mm x hundreds of mm. It should be understood that it is much smaller than a scale when a passage is formed in a module case itself.

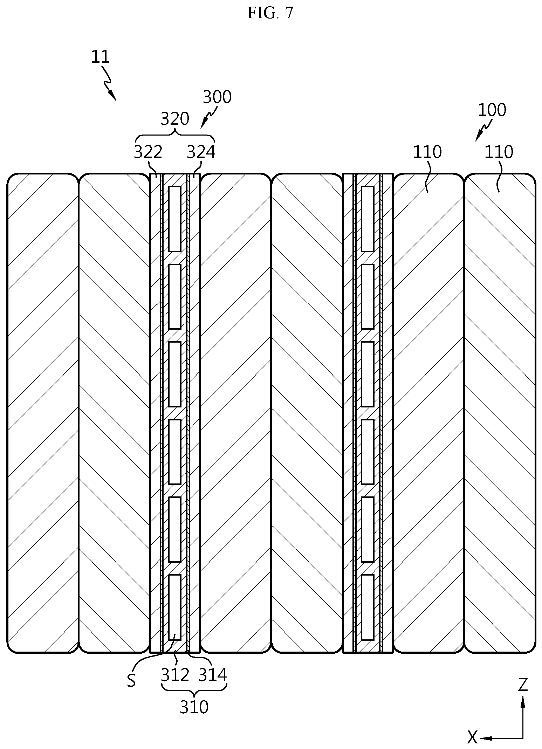

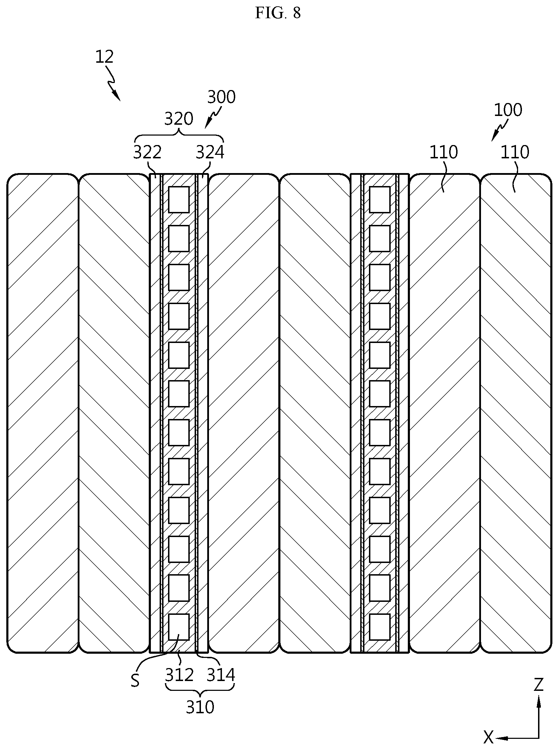

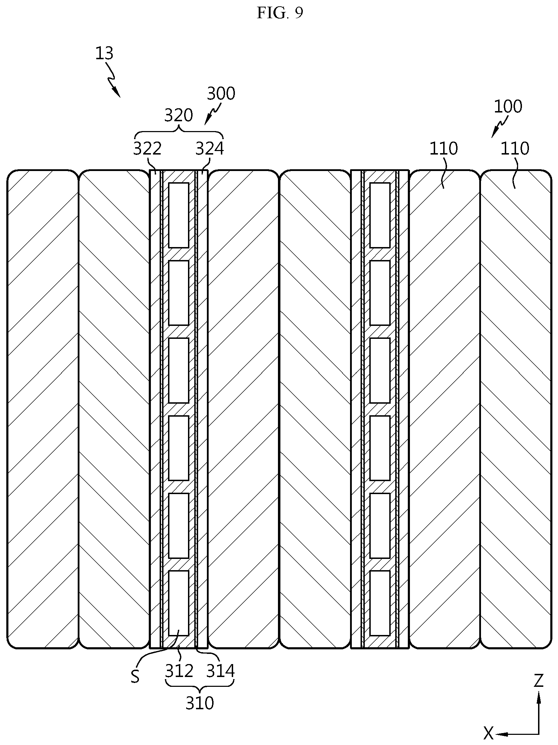

FIG. 7 is a view illustrating a battery module 11, according to a second embodiment of the present disclosure. FIG. 8 is a view illustrating a battery module 12, according to a third embodiment of the present discourse. FIG. 9 is a view illustrating a battery module 13, according to a fourth embodiment of the present disclosure.

Because the battery modules 11, 12, 13 according to the second to fourth embodiments of the present disclosure described with reference to FIGS. 7 to 9 are similar to the battery module 10 of the previous embodiment, a repeated description of substantially the same or similar elements as those in the previous embodiment will be omitted and a difference from the previous embodiment will be mainly described.

Referring to FIGS. 7 to 9, the hollow portion S provided in the body portion 312 may extend in at least one of the up-down direction and the stacking direction of the plurality of battery cells 110, in the body portion 312.

For example, as in the battery module 11 of FIG. 7, the hollow portion S may extend in the up-down direction of the plurality of battery cells 110, in the body portion 312. In other words, a size of the hollow portion S in the up-down direction may be greater than that of the hollow portion S of FIGS. 2 to 4.

Also, as in the battery module 12 of FIG. 8, the hollow portion S may extend in the stacking direction of the plurality of battery cells 110, in the body portion 312. In other words, a size of the hollow portion S in the stacking direction of the battery cell 110 may be greater than that of the hollow portion S in FIGS. 2 to 4.

Also, as in the battery module 13 of FIG. 9, the hollow portion S may extend in both the up-down direction and the stacking direction of the plurality of battery cells 110, in the body portion 312.

In the battery modules 11, 12, 13 according to the second to fourth embodiments of the present disclosure, because a volume of the hollow portion S in which an air layer is formed may be larger, the spread of a flame due to thermal runaway of the cell assembly 100 may be more reliably suppressed.

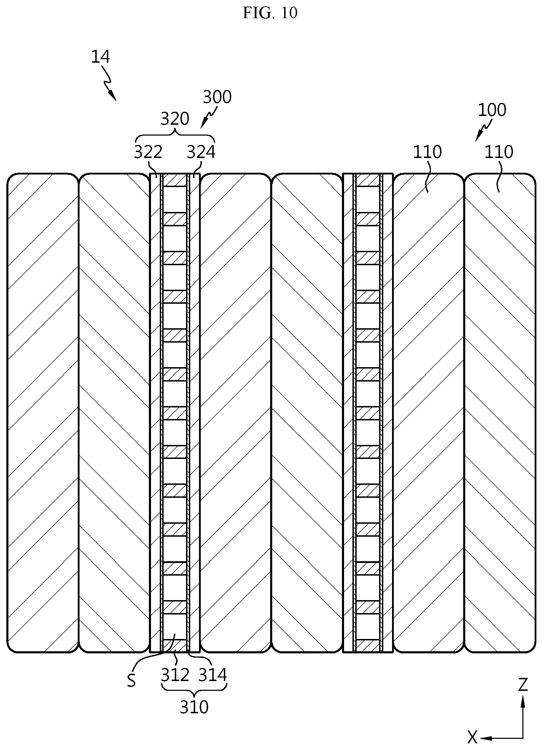

FIG. 10 is a view illustrating a battery module 14, according to a fifth embodiment of the present disclosure.

Because the battery module 14 according to the present embodiment is similar to the battery module 10 of the previous embodiment, a repeated description of substantially the same or similar elements as those in the previous embodiment will be omitted and a difference from the previous embodiment will be mainly described.

According to the battery module 14 of FIG. 10, the hollow portion S provided in the body portion 312 may extend in the stacking direction of the plurality of battery cells 110 in the body portion 312 to contact the coating portion 314.

In the battery module 14 according to the present embodiment, because the hollow portion S in which an air layer is formed contacts the coating portion 314, heat transfer to the body portion 312 formed of a metal material may be minimized.

That is, although the body portion 312 does not easily burn in a flame as described above, the body portion 312 is formed of a metal material and thus may transfer heat to adjacent battery cells 110. Accordingly, in the battery module 14 according to the present embodiment, because the hollow portion S extends in the stacking direction of the plurality of battery cells 110 to contact the coating portion 314, heat transfer to the body portion 312 may be minimized. Accordingly, the spread of a flame generated in a specific battery cell 110 to other adjacent battery cells 110 may be more reliably delayed.

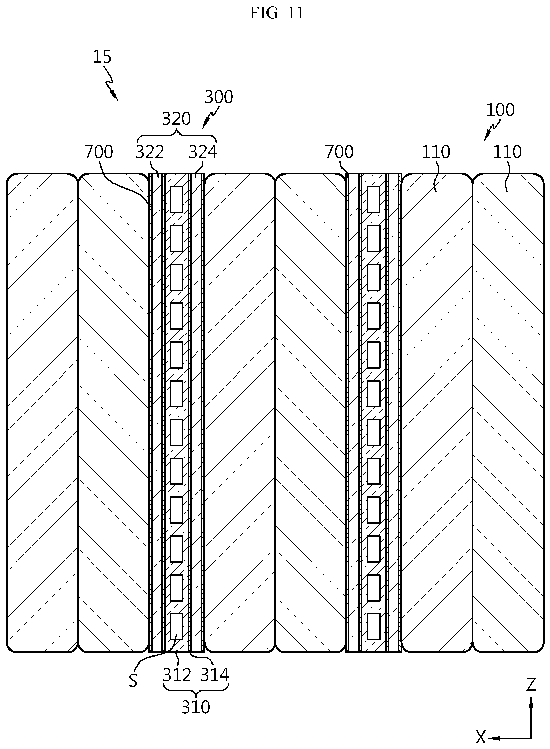

FIG. 11 is a view illustrating a battery module 15, according to a sixth embodiment of the present disclosure.

Because the battery module 15 according to the present embodiment is similar to the battery module 10 of the previous embodiment, a repeated description of substantially the same or similar elements as those in the previous embodiment will be omitted and a difference from the previous embodiment will be mainly described.

The battery module 15 of FIG. 11 may further include a heat blocking member 700.

The heat blocking member 700 may be located between the compression pad 320 and the battery cell 110 facing the compression pad 320, in the stacking direction of the plurality of battery cells 110.

The heat blocking member 700 may be configured to block a flame due to thermal runaway of the cell assembly 100. For example, the heat blocking member 700 may be provided as a thermal barrier coating. To this end, a thermal blocking coating material (e.g., an ecofriendly coating material) may be applied or attached to the heat blocking member 700.

In the battery module 15 according to the present embodiment, because the spread of a flame is primarily delayed through the heat blocking member 700 for blocking a flame due to thermal runaway of the cell assembly 100, is secondarily delayed through the coating portion 314, and thirdly delayed through the body portion 312 and the hollow portion S provided in the body portion 312, the spread of a flame may be more effectively delayed. Also, according to this embodiment, structural stability of the battery module 10 may be more stably maintained.

Because the heat blocking member 700 is located between the compression pad 320 and the battery cell 110 formed of a material vulnerable to a flame, the spread of a flame to the compression pad 320 may be delayed, thereby further ensuring structural stability of the compression pad assembly 300.

The battery module 10 according to the present disclosure may constitute a battery pack. That is, a battery pack according to the present disclosure may include at least one battery module according to the present disclosure.

Also, the battery pack according to the present disclosure may be applied to a vehicle such as an electric vehicle. That is, a vehicle according to the present disclosure may include at least one battery pack according to the present disclosure.

The battery module described above, and the battery pack including the same may be applied to various devices. The device may include, but is not limited to, a transportation means such as an electric bicycle, an electric vehicle, or a hybrid vehicle. The battery pack may be suitable for use as a battery pack for an electric vehicle. Also, the battery pack may be used as an energy source of an energy storage system (ESS).

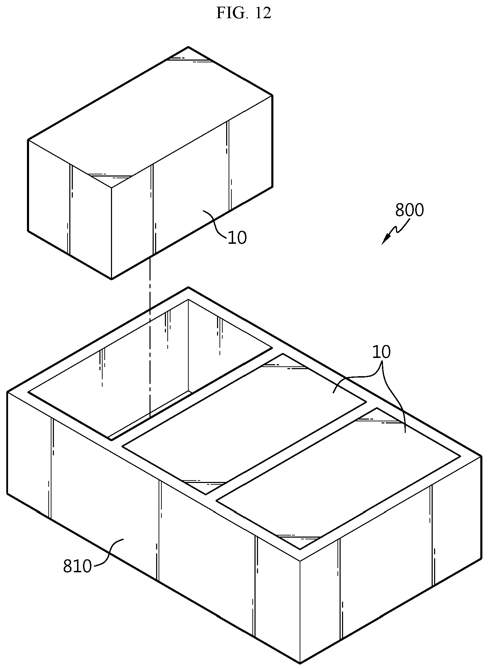

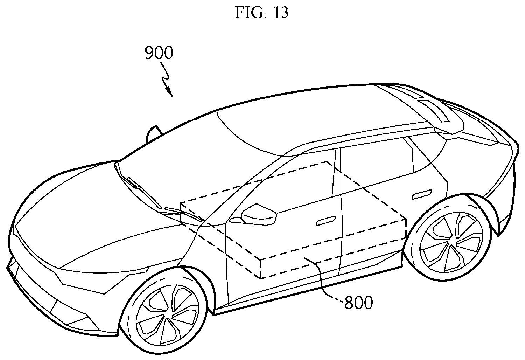

FIG. 12 is a schematic view illustrating a battery pack, according to an embodiment of the present disclosure. FIG. 13 is a schematic view illustrating a vehicle, according to an embodiment of the present disclosure.

Referring to FIGS. 12 and 13, a battery pack 800 according to an embodiment of the present disclosure may include at least one battery module 10 according to the previous embodiment and a pack case 810 for packaging the at least one battery module 10. The battery pack 800 may include at least one of any of the battery modules 11, 12, 13, 14, 15, instead of the battery module 10.

The battery pack 800 according to the present disclosure may further include various devices for controlling charging and discharging of the battery module 10, for example, a battery management system (BMS), a current sensor, and a fuse, in addition to the battery module 10 and the pack case 810. The BMS estimates state information of cells in the battery pack 800, and manages the battery pack 800 by using the estimated state information. For example, the BMS estimates and manages state information of the battery pack 800 such as a state of charge (SOC), a state of health (SOH), a maximum input/output power capability, and an output voltage. The BMS may control charging and discharging of the battery pack 800 by using the state information, and further, may estimate a time to replace the battery pack 800.

The battery modules 10 may have a substantially rectangular parallelepiped shape and may be regularly arranged in the pack case 810, and each battery module 10 may be connected to ensure power required to drive a vehicle 900.

The pack case 810 is a container in which the battery modules 10 are fixedly accommodated, and is a rectangular parallelepiped box. The pack case 810 may be located at a certain position in the vehicle 900.

Preferably, the vehicle 900 may be an electric vehicle. The battery pack 800 may be used as an electric energy source for driving the vehicle 900 by providing a driving force to a motor of the electric vehicle. In this case, the battery pack 800 has a high nominal voltage of 100 V or more.

The battery pack 800 may be charged or discharged by an inverter according to driving of a motor and/or an internal combustion engine. The battery pack 800 may be charged by a regenerative charging device coupled to a brake. The battery pack 800 may be electrically connected to the motor of the vehicle 900 through the inverter. And, the battery pack 800 may also be provided in other devices, equipment, and facilities such as an ESS using a secondary battery in addition to the vehicle.

As such, because the battery pack 800 and the devices, equipment, or facilities including the battery pack 800 such as the vehicle 900 according to the present embodiment include the battery module 10, the battery pack 800 and the devices, equipment, or facilities including the battery pack 800 may have all advantages of the battery module 10.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of an target object, a position of an observer, etc.

### [Description of Reference Numerals]

10, 11, 12, 13, 14, 15 : battery module
100 : cell assembly
110 : battery cell
300 : compression pad assembly
310 : heat blocking unit
S : hollow portion
312 : body portion
314 : coating portion
320 : compression pad
700 : heat blocking member

Preferred examples of the Invention are specified in the following items:
Item 1. A battery module comprising:
   a cell assembly comprising a plurality of battery cells; and
   a compression pad assembly located between the plurality of battery cells, the compression pad assembly comprising a heat blocking unit in which at least one hollow portion is formed.
Item 2. The battery module according to item 1, wherein the compression pad assembly is configured to closely contact facing battery cells in a stacking direction of the plurality of battery cells.
Item 3. The battery module according to item 1, wherein an air layer is formed in the at least one hollow portion.
Item 4. The battery module according to item 1, wherein the heat blocking unit further comprises a body portion in which the at least one hollow portion is formed, the body portion being located between the plurality of battery cells,
   wherein the body portion is formed of a metal material.
Item 5. The battery module according to item 4, wherein the heat blocking unit further comprises a coating portion provided on both side surfaces of the body portion in a stacking direction of the plurality of battery cells and configured to block a flame due to thermal runaway of the cell assembly.
Item 6. The battery module according to item 5, wherein the compression pad assembly further comprises a compression pad provided on the coating portion in the stacking direction of the plurality of battery cells and configured to closely contact facing battery cells in the stacking direction of the plurality of battery cells.
Item 7. The battery module according to item 4, wherein the hollow portion extends in at least one of an up-down direction and a stacking direction of the plurality of battery cells, in the body portion.
Item 8. The battery module according to item 5, wherein the hollow portion extends in the stacking direction of the plurality of battery cells in the body portion to contact the coating portion.
Item 9. The battery module according to item 6, further comprising a heat blocking member located between the compression pad and a battery cell facing the compression pad, in the stacking direction of the plurality of battery cells.
Item 10. The battery module according to item 1, wherein the hollow portion is included as a single layer in the compression pad assembly.
Item 11. The battery module according to item 1, wherein the hollow portion extends in a longitudinal direction of the battery cell, and a plurality of hollow portions are included in the compression pad assembly while being spaced apart from each other.
Item 12. The battery module according to item 11, wherein the plurality of hollow portions are regularly arranged by controlling a size of each hollow portion and an interval between the hollow portions.
Item 13. The battery module according to item 5, wherein the coating portion comprises a ceramic coating layer formed of only an inorganic material, without an organic material.
Item 14. A battery pack comprising at least one battery module according to any one of items 1 to 13.
Item 15. A vehicle comprising at least one battery pack according to item 14.

## Claims

1. A battery module comprising:
a cell assembly comprising a plurality of battery cells; and
a compression pad assembly located between the plurality of battery cells, the compression pad assembly comprising a heat blocking unit in which at least one hollow portion is formed;
wherein the compression pad assembly is configured to closely contact facing battery cells in a stacking direction of the plurality of battery cells to suppress swelling that may occur in the cell assembly;
wherein an air layer is formed in the at least one hollow portion, the air layer functioning as a heat insulating material capable of preventing heat transfer to the battery cells located on both sides of the compression pad assembly; and
wherein the heat blocking unit further comprises a body portion in which the at least one hollow portion is formed, the body portion being located between the plurality of battery cells,
wherein the body portion is formed of a metal material.

2. The battery module according to claim 1, wherein the compression pad assembly partially includes an elastic material.

3. The battery module according to claim 1, wherein the compression pad assembly is compressed when the facing battery cells expand.

4. The battery module according to claim 1, wherein the heat blocking unit further comprises a coating portion provided on both side surfaces of the body portion in a stacking direction of the plurality of battery cells and configured to block a flame due to thermal runaway of the cell assembly.

5. The battery module according to claim 4, wherein the compression pad assembly further comprises a compression pad provided on the coating portion in the stacking direction of the plurality of battery cells and configured to closely contact facing battery cells in the stacking direction of the plurality of battery cells.

6. The battery module according to claim 1, wherein the hollow portion extends in at least one of an up-down direction and a stacking direction of the plurality of battery cells, in the body portion.

7. The battery module according to claim 4, wherein the hollow portion extends in the stacking direction of the plurality of battery cells in the body portion to contact the coating portion.

8. The battery module according to claim 5, further comprising a heat blocking member located between the compression pad and a battery cell facing the compression pad, in the stacking direction of the plurality of battery cells.

9. The battery module according to claim 1, wherein the hollow portion is included as a single layer in the compression pad assembly.

10. The battery module according to claim 1, wherein the hollow portion extends in a longitudinal direction of the battery cell, and a plurality of hollow portions are included in the compression pad assembly while being spaced apart from each other.

11. The battery module according to claim 10, wherein the plurality of hollow portions are regularly arranged by controlling a size of each hollow portion and an interval between the hollow portions.

12. The battery module according to claim 4, wherein the coating portion comprises a ceramic coating layer formed of only an inorganic material, without an organic material.

13. A battery pack comprising at least one battery module according to any one of claims 1 to 12.

14. A vehicle comprising at least one battery pack according to claim 13.
